# EUROPEAN PATENT SPECIFICATION

(11) **EP 4 503 190 B1**
(45) Date of publication and mention of the grant of the patent: **14.10.2026**
(21) Application number: 23779527.3
(22) Date of filing: 13.03.2023
(51) Int. Cl.: C01G 51/42, H01M 4/525, H01M 4/36, H01M 4/505

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**
POSITIVELEKTRODENAKTIVMATERIAL FÜR EINE SEKUNDÄRBATTERIE MIT WASSERFREIEM ELEKTROLYT UND SEKUNDÄRBATTERIE MIT WASSERFREIEM ELEKTROLYT
MATÉRIAU ACTIF D'ÉLECTRODE POSITIVE POUR BATTERIE SECONDAIRE À ÉLECTROLYTE NON AQUEUX, ET BATTERIE SECONDAIRE À ÉLECTROLYTE NON AQUEUX

(30) Priority: 29.03.2022 JP 2022053276
(43) Date of publication of application: 05.02.2025
(73) Proprietor: Panasonic Energy Co., Ltd., Osaka 570-8511 (JP)
(72) Inventor: ARIMOTO Itsuki, Kadoma-shi, Osaka 571-0057 (JP); IKEDA Yoshihiko, Kadoma-shi, Osaka 571-0057 (JP)
(74) Representative: Eisenführ Speiser
(86) International application number: PCT/JP2023/009718
(87) International publication number: WO 2023/189507

(56) References cited:
- CN-A- 112 151 791
- JP-A- 2007 084 410
- JP-A- 2008 016 267
- JP-A- 2017 021 941

## Description

### TECHNICAL FIELD

The present disclosure relates to a positive electrode active material for non-aqueous electrolyte secondary battery, and a non-aqueous electrolyte secondary battery using this positive electrode active material.

### BACKGROUND

JP 2017-021941 A relates to a non-aquaous electrolyte secondary battery. A lithium cobalt content compound oxide denoted by LiₐCo_{1-6-c}M¹₆M²₆O₂ is provided, wherein M¹ is at least one element selected from the group consisting of Al, Mg, Ni, Mn, Na, Fe, and Cu, M² is at least one element selected from the group consisting of Zr, Ti, Bi, Ca, F, P, Sr, W, Ba, Si, Zn, Mo, V, Sn, Sb, Ta, Nb, Ge, Cr, K, S, Er and Zn, 0.9 ≤ a ≤ 1.10, 0.005 < b ≤ 0.03, and 0 < c < 0.002.

Non-aqueous electrolyte secondary batteries such as lithium ion batteries are widely used as power sources for various electronic devices because such batteries are lightweight and have high energy density. In recent years, with an increase in the demand for electronic devices to operate for long periods of time, there is a demand for batteries with even higher capacities. Furthermore, non-aqueous electrolyte secondary batteries are also widely used for in-vehicle applications, power storage applications, and the like. Since the positive electrode active material, which is the main component of the positive electrode, has a significant effect not only on battery capacity but also on battery performance such as charge-discharge cycle characteristic and thermal stability, many studies have been conducted regarding the positive electrode active material.

For example, Patent Literature 1 discloses a non-aqueous electrolyte secondary battery using, as the positive electrode active material, a lithium nickel cobalt composite oxide represented by general formula LiNiCo_{(1-x-y)}M1_{y}O₂ (where 0.65 ≤ x ≤ 0.90, 0.02 ≤ y ≤ 0.06, and M1 is at least one metal element selected from the group consisting of Al, Mg, Ti, Mn, and Zr) and a lithium cobalt composite oxide represented by general formula LiCo_{(1-z)}M2_{z}O₂ (where 0.005 ≤ z ≤ 0.03, and M2 is at least one metal element selected from the group consisting of Al, Mg, Ti, Mn, and Zr).

Furthermore, Patent literature 2 is concerned with the issue of thermal stability at high voltage and discloses various positive electrode active materials for non-aqueous electrolyte secondary battery comprising a lithium cobalt composite oxide.

### CITATION LIST

### PATENT LITERATURE

PATENT LITERATURE 1: Japanese Unexamined Patent Application Publication No. 2011-192541
Patent Literature 2: JP 2008 016267 A

### SUMMARY

In a non-aqueous electrolyte secondary battery that uses a lithium cobalt composite oxide (hereinafter may be referred to as "LCO") as the positive electrode active material and a carbon material such as graphite as the negative electrode active material, the end-of-charge voltage is generally less than or equal to 4.4 V, and it is possible to achieve an increase in the capacity by increasing the end-of-charge voltage. However, as a result of studies by the present inventors, it was found that when the end-of-charge voltage is increased in a battery using a conventional LCO, the crystal structure of the LCO becomes collapsed leading to a shorter charge-discharge cycle life, and thermal stability is degraded.

A positive electrode active material for non-aqueous electrolyte secondary battery according to the present disclosure is defined in claim 1.

A non-aqueous electrolyte secondary battery according to the present disclosure includes a positive electrode, a negative electrode, and a non-aqueous electrolyte, and the positive electrode contains the above-described positive electrode active material.

The positive electrode active material according to the present disclosure enables to improve the cycle characteristic and thermal stability in a non-aqueous electrolyte secondary battery which achieving an increase in the capacity.

### BRIEF DESCRIPTION OF DRAWINGS

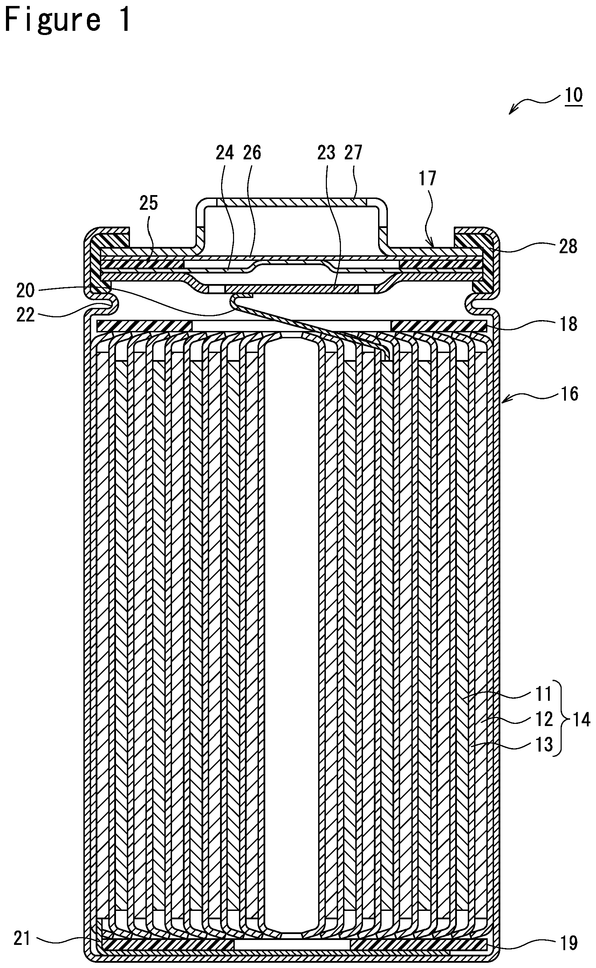

[FIG. 1] FIG. 1 is a cross-sectional view of a non-aqueous electrolyte secondary battery according to an example embodiment.

### DESCRIPTION OF EMBODIMENTS

As noted above, in a non-aqueous electrolyte secondary battery using an LCO-based composite oxide as the positive electrode active material, it is an important issue to increase the end-of-charge voltage and thereby increase the capacity while ensuring good cycle characteristic and thermal stability. As a result of conducting intensive studies to solve this issue, the present inventors have discovered that by using a specific composite oxide represented by general formula LiCo_{(1-w-x-y-z)}Al_{w}MgₓTi_{y}Mn_{z}O₂, where 0.010 ≤ w ≤ 0.013, 0.003 ≤ x ≤ 0.006, 0.0004 ≤ y ≤ 0.0006, and 0 ≤ z ≤ 0.0015, as the positive electrode active material, excellent cycle characteristic and thermal stability are ensured even when the end-of-charge voltage of the battery is increased.

Furthermore, as a result of studies conducted by the present inventors, it has become evident that by adding a predetermined amount of Mn to the above-noted composite oxide, improvement in the cycle characteristic becomes more notable, and the low-temperature discharge characteristic is significantly improved.

Example embodiments of a positive electrode active material for non-aqueous electrolyte secondary battery according to the present disclosure and a non-aqueous electrolyte secondary battery using this positive electrode active material will be described in detail below by reference to the drawings. Configurations formed by selectively combining the constituent elements of a plurality of embodiments and variants described below are included within the scope of the present disclosure.

In the following, although a cylindrical battery in which a spiral-type electrode assembly 14 is housed in a bottomed cylindrical outer can 16 will be described by way of example, the outer casing is not limited to a cylindrical outer can, and may be, for example, a rectangular outer can (for rectangular battery) or a coin-shaped outer can (for coin-shaped battery). Alternatively, an outer casing composed of a laminate sheet including a metal layer and a resin layer (for laminate battery) may be used. Furthermore, the electrode assembly is not limited to being of a spiral type, and may be a laminate-type electrode assembly formed by alternately laminating a plurality of positive electrodes and a plurality of negative electrodes with interposed separators.

FIG. 1 is a cross-sectional view of a non-aqueous electrolyte secondary battery 10 according to an example embodiment. As shown in FIG. 1, the non-aqueous electrolyte secondary battery 10 comprises a spiral-type electrode assembly 14, a non-aqueous electrolyte (not shown in drawing), and an outer can 16 that houses the electrode assembly 14 and the non-aqueous electrolyte. The electrode assembly 14 comprises a positive electrode 11, a negative electrode 12, and a separator 13, and has a spiral structure formed by spirally winding a positive electrode 11 and a negative electrode 12 with an interposed separator 13. The outer can 16 is a bottomed cylindrical metal container having an opening at one axial end, and the opening of the outer can 16 is closed by a sealing assembly 17. For convenience of explanation, the side of the battery toward the sealing assembly 17 will be referred to as "upper", and the side toward the bottom portion of the outer can 16 will be referred to as "lower".

The non-aqueous electrolyte contains a non-aqueous solvent and an electrolyte salt dissolved in the non-aqueous solvent. As the non-aqueous solvent, for example, esters, ethers, nitriles, amides, a mixed solvent containing two or more of the foregoing, and the like may be used. The non-aqueous solvent may contain a halogen-substituted product obtained by substituting at least a part of hydrogens in the above solvents with halogen atoms such as fluorine. Examples of the non-aqueous solvent include ethylene carbonate (EC), ethyl methyl carbonate (EMC), dimethyl carbonate (DMC), and a mixed solvent containing the foregoing solvents. As the electrolyte salt, for example, a lithium salt such as LiPF₆ is used. The non-aqueous electrolyte is not limited to a liquid electrolyte, and may be a solid electrolyte.

The positive electrode 11, the negative electrode 12, and the separator 13, which constitute the electrode assembly 14, are all long strip-shaped members, and are alternately laminated in the radial direction of the electrode assembly 14 by being wound in a spiral shape. The negative electrode 12 is formed to have a size slightly larger than that of the positive electrode 11 in order to prevent lithium deposition. That is, the negative electrode 12 is formed to be longer than the positive electrode 11 in the lengthwise direction and in the widthwise direction (i.e., the shorter direction). The separator 13 is formed to have a size slightly larger than at least the positive electrode 11, and, for example, two sheets of separators are arranged so as to sandwich the positive electrode 11. The electrode assembly 14 has a positive electrode lead 20 connected to the positive electrode 11 by welding or the like, and a negative electrode lead 21 connected to the negative electrode 12 by welding or the like.

Above and below the electrode assembly 14, insulation plates 18, 19 are provided respectively. In the example shown in FIG. 1, the positive electrode lead 20 extends through a through hole in the insulation plate 18 and toward the sealing assembly 17, while the negative electrode lead 21 extends outside the insulation plate 19 and toward the bottom portion of the outer can 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom portion of the outer can 16, and the outer can 16 serves as the negative electrode terminal.

A gasket 28 is provided between the outer can 16 and the sealing assembly 17 to ensure airtightness inside the battery. The outer can 16 has a grooved portion 22 formed thereon, where a part of a side surface portion projects inward, and which supports the sealing assembly 17. The grooved portion 22 is preferably formed in an annular shape along the circumferential direction of the outer can 16, and supports the sealing assembly 17 on its upper surface. The sealing assembly 17 is fixed to an upper part of the outer can 16 by means of the grooved portion 22 and an opening end of the outer can 16 which is crimped to the sealing assembly 17.

The sealing assembly 17 has a structure obtained by laminating, in order from the electrode assembly 14 side, the internal terminal plate 23, a lower vent member 24, an insulation member 25, an upper vent member 26, and the cap 27. Each of the members constituting the sealing assembly 17 has, for example, a disk shape or a ring shape, and the respective members except the insulation member 25 are mutually electrically connected. The lower vent member 24 and the upper vent member 26 are connected to each other at their central portions, and the insulation member 25 is interposed between peripheral edge portions of these vent members. When the battery internal pressure increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

A detailed description will now be given regarding the positive electrode 11, the negative electrode 12, and the separator 13 which constitute the electrode assembly 14, and in particular regarding the positive electrode active material constituting the positive electrode 11.

### [Positive Electrode]

The positive electrode 11 comprises a positive electrode core and a positive electrode mixture layer formed on the positive electrode core. As the positive electrode core, it is possible to use a foil of a metal such as aluminum or an aluminum alloy that is stable in the potential range of the positive electrode 11, a film having such a metal disposed on its surface layer, and the like. The positive electrode mixture layer contains a positive electrode active material, a binder, and a conductive agent, and is preferably provided on both sides of the positive electrode core. The positive electrode active material contains, as the main component, a lithium cobalt composite oxide having a layered crystal structure. The positive electrode 11 can be produced, for example, by applying a positive electrode mixture slurry containing the positive electrode active material, the binder, the conductive agent, and the like onto the positive electrode core, drying the applied coating, and then compressing the coating to thereby form positive electrode mixture layers on both sides of the positive electrode core.

Examples of the binder contained in the positive electrode mixture layer include fluororesins such as polytetrafluoroethylene (PTFE) and polyvinylidene fluoride (PVdF), polyacrylonitrile (PAN), polyimides, acrylic resins, and polyolefins. These resins may be used in combination with a cellulose derivative such as carboxymethyl cellulose (CMC) or a salt thereof, polyethylene oxide (PEO), and the like. The binder content is, for example, greater than or equal to 0.5 mass% and less than or equal to 5 mass% based on the mass of the positive electrode mixture layer.

The conductive agent contained in the positive electrode mixture layer 31 is preferably a carbon material, including carbon black such as acetylene black and Ketjenblack, graphite, carbon nanotubes, and the like. The conductive agent content is, for example, greater than or equal to 0.1 mass% and less than or equal to 10 mass% based on the mass of the positive electrode mixture layer.

As noted above, the positive electrode active material comprises, as the main component, a lithium cobalt composite oxide having a layered crystal structure. The lithium cobalt composite oxide (hereinafter referred to as "LCO(A)") constituting the main component of the positive electrode active material is a composite oxide represented by general formula LiCo_{(1-w-x-y-z)}Al_{w}MgₓTi_{y}Mn_{z}O₂ (where 0.010 ≤ w ≤ 0.013, 0.003 ≤ x ≤ 0.006, 0.0004 ≤ y ≤ 0.0006, and 0 ≤ z ≤ 0.0015). LCO(A) is a composite oxide in which predetermined amounts of Al, Mg, and Ti are added to a composite oxide containing Li and Co as metal elements. The Co content in LCO(A) is, for example, greater than or equal to 97.8 mol% based on the total number of moles of elements other than Li and O.

In the present specification, the main component of the positive electrode active material means the component that has the highest mass ratio among the materials constituting the positive electrode active material. The LCO(A) content is preferably greater than or equal to 60 mass%, and more preferably greater than or equal to 70 mass%, based on the mass of the positive electrode active material. The positive electrode active material may be composed of substantially only LCO(A). The composition of the composite oxide can be measured using an ICP emission spectrometer (iCAP6300 manufactured by Thermo Fisher Scientific).

The positive electrode mixture layer may contain, as the positive electrode active material, a lithium-containing composite oxide other than LCO(A) so long as the object of the present disclosure is not impaired. An example of the lithium-containing composite oxide other than LCO(A) is a lithium cobalt composite oxide which substantially does not contain Al, Mg, and Ti, and which is represented by general formula LiCoO₂ (hereinafter referred to as "LCO(B)"). When LCO(B) is used in combination, the mass ratio of LCO(A) to LCO(B) is, for example, in the range from 60:40 to 95:5, and preferably in the range from 70:30 to 90: 10.

As noted above, LCO(A) has a layered crystal structure. A specific example thereof may be a layered structure belonging to the space group R-3m, or a layered structure belonging to the space group C2/m. It is considered that addition of Al, Mg, and Ti, and especially addition of Al and Mg, greatly contributes to stabilization of such a crystal structure. The crystal structure of the composite oxide can be measured with a powder X-ray diffractometer (RINT2200 manufactured by Rigaku Corporation, using Cu-Kα radiation source).

The volume-based median diameter (D50) of LCO(A) is, for example, greater than or equal to 5 µm and less than or equal to 50 µm, preferably greater than or equal to 10 µm and less than or equal to 40 µm, and more preferably greater than or equal to 15 µm and less than or equal to 30 µm. LCO(A) is, for example, in the form of secondary particles formed by aggregation of primary particles, and the D50 of LCO(A) means the D50 of the secondary particles. D50 means a particle size at which, in a volume-based particle size distribution, the cumulative frequency from the smaller particle size end reaches 50 %, and is also called the mid-level diameter. The particle size distribution of the composite oxide can be measured with a laser diffraction particle size distribution measuring device (for example, MT3000II manufactured by MicrotracBEL Corp.) using water as the dispersion medium.

The D50 of LCO(B) is preferably smaller than the D50 of LCO(A), and is, for example, greater than or equal to 1 µm and less than or equal to 15 µm. By using two or more types of composite oxides having different D50 values as the positive electrode active material, the packing density of the particles is improved, and the capacity of the battery can be increased. When LCO(A) and LCO(B) are used in combination, by configuring such that the D50 of LCO(A) > the D50 of LCO(B), it is possible to augment improvement in the cycle characteristic and thermal stability while achieving an increase in the battery capacity.

The content of Al in LCO(A) is greater than or equal to 1.0 mol% and less than or equal to 1.3 mol%, and more preferably greater than or equal to 1.1 mol% and less than or equal to 1.2 mol %, based on the total number of moles of elements other than Li and O. When the amount of Al added is within this range, stability of the crystal structure is enhanced, and the cycle characteristic and thermal stability of the battery are improved. If the amount of Al added is less than 1.0 mol%, no improvement in the cycle characteristic and thermal stability can be obtained. Furthermore, if the amount exceeds 1.3 mol%, no improvement in the cycle characteristic and thermal stability can be obtained, and capacity reduction becomes significant. Here, even when the amount of Al added is within the above-noted range, if Mg and Ti are not added, the above-described improvement cannot be obtained.

The content of Mg in LCO(A) is greater than or equal to 0.3 mol% and less than or equal to 0.6 mol % based on the total number of moles of elements other than Li and O. When the amount of Mg added is within this range, stability of the crystal structure is enhanced, and the cycle characteristic and thermal stability are improved. If the amount of Mg added is less than 0.3 mol% or exceeds 0.6 mol%, no improvement in the cycle characteristic and thermal stability can be obtained. If the amount of Mg added is too large, capacity reduction becomes significant.

The content of Ti in LCO(A) is greater than or equal to 0.04 mol% and less than or equal to 0.06 mol% based on the total number of moles of elements other than Li and O. When the amount of Ti added is within this range, it is considered that material resistance can be reduced, and the cycle characteristic, in particular, is improved. If the amount of Ti added is less than 0.04 mol% or exceeds 0.06 mol%, no improvement in the cycle characteristic can be obtained. If the amount of Ti added is too large, capacity reduction becomes significant.

It is preferable that LCO(A) further contains Mn, and that the Mn content (z) in the general formula satisfies 0.0010 ≤ z ≤ 0.0015. When the amount of Mn added is greater than or equal to 0.10 mol% and less than or equal to 0.15 mol% based on the total number of moles of elements other than Li and O, it is considered that material resistance can be reduced, and improvement in the cycle characteristic and thermal stability of the battery becomes more notable. Furthermore, the discharge characteristic in a low-temperature environment is also improved. If the amount of Mn added is too large, for example, the cycle characteristic and the low-temperature discharge characteristic are actually degraded, and capacity reduction becomes significant.

LCO(A) is produced, for example, by performing the following processes.
(1) A first process of obtaining a composite hydroxide or composite oxide containing Co, Al, Mg, Ti, and Mn;
(2) A second process of mixing the composite hydroxide or composite oxide with a lithium compound and firing the mixture; and
(3) A third process of washing the fired product with water and drying the product.

In the first process, for example, an alkaline solution of sodium hydroxide or the like is added dropwise to a solution of a metal salt containing Co, Al, Mg, Ti, and Mn while stirring the solution, so that the pH value is adjusted to the alkaline side, and a composite hydroxide is thereby precipitated (or co-precipitated). In the first process, for example, the composite hydroxide may be fired at a temperature lower than that used for firing in the second process.

In the second process, the composite hydroxide or composite oxide obtained in the first process is mixed with a lithium compound. Examples of the lithium compound include Li₂CO₃, LiOH, Li₂O₂, Li₂O, LiNO₃, LiNO₂, Li₂SO₄, LiOH•H₂O, LiH, and LiF. The firing of the mixture in the second process is performed, for example, in an oxygen stream at a temperature of higher than or equal to 500 °C and lower than or equal to 900 °C. The firing temperature is preferably higher than or equal to 600 °C and lower than or equal to 800 °C. The firing may be carried out in two or more stages using different firing conditions.

In the third process, the fired product is washed with water to remove impurities such as excess Li, and the washed fired product is dried. The fired product is subjected to pulverization, classification, and the like as necessary to adjust the D50 of LCO(A) to within the target range. The water-washed fired product may be dried in a vacuum or in the atmosphere. An example drying temperature is higher than or equal to 150 °C and lower than or equal to 250°C.

### [Negative Electrode]

The negative electrode 12 comprises a negative electrode core and a negative electrode mixture layer formed on the negative electrode core. As the negative electrode core, it is possible to use a foil of a metal such as copper or a copper alloy that is stable in the potential range of the negative electrode 12, a film having such a metal disposed on its surface layer, and the like. The negative electrode mixture layer contains a negative electrode active material, a binder, and, when necessary, a conductive agent such as carbon nanotubes, and is preferably formed on both sides of the negative electrode core. The negative electrode 12 can be produced, for example, by applying a negative electrode mixture slurry containing the negative electrode active material, the binder, and the like onto the negative electrode core, drying the applied coating, and then compressing the coating to thereby form negative electrode mixture layers on both sides of the negative electrode core.

The negative electrode mixture layer generally contains, as the negative electrode active material, a carbon material that reversibly occludes and releases lithium ions. A suitable example of the carbon material is graphite, including natural graphite such as flake graphite, massive graphite, and amorphous graphite, and artificial graphite such as massive artificial graphite (MAG) and graphitized mesophase carbon microbeads (MCMB). Further, as the negative electrode active material, it is possible to use an active material containing at least one of an element that forms an alloy with Li, such as Si or Sn, and a material containing such an element. A suitable example of this active material is a Si-containing material in which fine Si particles are dispersed in a SiO₂ phase, a silicate phase such as lithium silicate, or an amorphous carbon phase. As the negative electrode active material, graphite and the Si-containing material may be used in combination.

As the binder contained in the negative electrode mixture layer, fluororesins, PAN, polyimides, acrylic resins, polyolefins, and the like can be used as in the case of the positive electrode 11, but styrene-butadiene rubber (SBR) is preferably used. Further, the negative electrode mixture layer preferably additionally contains CMC or a salt thereof, polyacrylic acid (PAA) or a salt thereof, polyvinyl alcohol (PVA), or the like. Among the foregoing, use of SBR in combination with CMC or a salt thereof or PAA or a salt thereof is preferred.

### [Separator]

As the separator 13, a porous sheet having ion permeability and insulating property is used. Specific examples of the porous sheet include a microporous thin film, a woven fabric, and a non-woven fabric. As the material of the separator 13, polyolefins such as polyethylene and polypropylene, cellulose, and the like are suitable. The separator 13 may have either a single-layer structure or a multi-layer structure. Further, on the surface of the separator 13, there may be formed a highly heat-resistant resin layer made of aramid resin or the like.

A filler layer containing an inorganic filler may be formed at the interface between the separator 13 and at least one of the positive electrode 11 and the negative electrode 12. Examples of the inorganic filler include oxides and phosphate compounds containing metal elements such as Ti, Al, Si, and Mg. The filler layer can be formed by applying a slurry containing the filler to the surface of the positive electrode 11, the negative electrode 12, or the separator 13.

### EXAMPLES

While the present disclosure will be further described below using Experimental Examples, the present disclosure is not limited to these Experimental Examples.

### <Experimental Example 1>

### [Synthesis of Positive Electrode Active Material]

A composite hydroxide obtained by a co-precipitation method and containing Co, Al, Mg, and Ti was mixed with lithium hydroxide so that the molar ratio of the total amount of metal elements to Li was 1.0:1.03. This mixture was fired in an oxygen stream at 850 °C for 20 hours. After that, the fired product was washed with water and dried in a vacuum at 180 °C for 2 hours. As a result, there was obtained a composite oxide having a layered crystal structure, containing the predetermined amounts of Al, Mg, and Ti, and having a D50 of approximately 26 µm (hereinafter referred to as "positive electrode active material (A)"). By ICP, the composition of the positive electrode active material (A) was confirmed to be LiCo_{0.98}Al_{0.01}Mg_{0.006}Ti_{0.0004}O₂.

By a method similar to that for the positive electrode active material (A), LiCoO₂ having a D50 of approximately 6 µm (hereinafter referred to as "positive electrode active material (B)") was obtained. The positive electrode active materials (A) and (B) were mixed in a mass ratio of 80:20, and this mixture was used as the positive electrode active material.

### [Production of Positive Electrode]

A positive electrode mixture slurry was prepared by mixing the above positive electrode active material, acetylene black, and polyvinylidene fluoride in a solids mass ratio of 97.6:1.2:1.2, and using N-methyl-2-pyrrolidone (NMP) as the dispersion medium. Next, the positive electrode mixture slurry was applied onto a positive electrode core made of aluminum foil, and the applied coating was dried and compressed. After that, the positive electrode core was cut into a predetermined electrode size, and a positive electrode having positive electrode mixture layers formed on both sides of the positive electrode core was obtained. An aluminum lead was welded to a portion of the positive electrode where the core was exposed.

### [Production of Negative Electrode]

Graphite was used as the negative electrode active material. A negative electrode mixture slurry was prepared by mixing the negative electrode active material, a sodium salt of CMC, and a SBR dispersion in a solids mass ratio of 97.8:1.2:1.2, and using water as the dispersion medium. Next, the negative electrode mixture slurry was applied onto a negative electrode core made of copper foil, and the applied coating was dried and rolled. After that, the negative electrode core was cut to a predetermined electrode size, and a negative electrode having negative electrode mixture layers formed on both sides of the negative electrode core was obtained. A nickel lead was welded to a portion of the negative electrode where the core was exposed.

### [Preparation of Non-Aqueous Electrolyte Solution]

A non-aqueous electrolyte was prepared by dissolving LiPF₆ at a concentration of 1.2 mol/L in a solvent obtained by mixing ethylene carbonate (EC) and ethyl methyl carbonate (EMC) in a volume ratio of 30:70 (at 25 °C).

### [Production of Non-Aqueous Electrolyte Secondary Battery]

The above positive electrode and the above negative electrode were wound in a spiral shape with an interposed separator, and the wound product was then pressed into a flat shape to obtain an electrode assembly. A laminate sheet was processed to form an outer casing, and the electrode assembly and the non-aqueous electrolyte solution were placed in the outer casing in an inert atmosphere. After that, pressure inside the outer casing was reduced to impregnate the separator with the electrolyte solution, and the opening of the outer casing was sealed. A non-aqueous electrolyte secondary battery having a length of 69 mm, a width of 56 mm, a thickness of 4.9 mm, and a rated capacity of 3150 mAh was thereby produced.

Regarding the above non-aqueous electrolyte secondary battery, a cycle test, a thermal test, and a low-temperature discharge test were performed under the conditions described below. Each test was performed on two batteries, and the measured values were averaged and used as an evaluation result. The evaluation results are shown in Table 1 together with the composition of the positive electrode active material (A)

### [Cycle Test]

In a room temperature (25 °C) environment, the above non-aqueous electrolyte secondary battery was charged at a constant current of 2205 mA until the battery voltage reached 4.45 V, and then discharged at a constant current of 1575 mA until the battery voltage reached 3.0 V. This charge-discharge cycle was repeated 500 times, and the ratio of the discharge capacity in the 500th cycle to the discharge capacity in the 1st cycle was calculated as the capacity retention rate.

### [Thermal Test]

The above non-aqueous electrolyte secondary battery after being charged until reaching the battery voltage of 4.50 V was placed in a thermostatic chamber and heated from room temperature to 130 °C at a rate of 5 °C/min. The battery voltage, the battery surface temperature, and the thermostatic chamber temperature were measured during the test, and the condition of the battery after the test was checked.

### [Low-Temperature Discharge Test]

In an environment of -20 °C, the above non-aqueous electrolyte secondary battery was charged at a constant current of 2205 mA until the battery voltage reached 4.45 V, and then discharged at a constant current of 1575 mA until the battery voltage reached 3.0 V. The discharge capacity at that time (-20°C capacity) was determined, and its ratio to the discharge capacity in a room temperature environment (25°C capacity) (i.e., -20°C capacity / 25°C capacity) was calculated.

### <Experimental Examples 2 to 14>

Non-aqueous electrolyte secondary batteries were produced in the same manner as in Experimental Example 1 except that composite oxides having the compositions shown in Table 1 were used respectively as the positive electrode active material (A), and the above-described tests were carried out.

**[Table 1]**

| | Positive electrode active material (A) | | | | Performance evaluation | | |
|---|---|---|---|---|---|---|---|
| | LiCo_{(1-w-x-y-z)}Al_{w}MgₓTi_{y}Mn_{z}O₂ | | | | Capacity retention rate (%) | Thermal test | Low-temperature capacity / roomtemperature capacity (%) |
| | w | x | y | z | | | |
| Experimental Example 1 | 0.0100 | 0.0060 | 0.0004 | - | 77.5 | No temperature increase | 36.5 |
| Experimental Example 2 | 0.0130 | 0.0030 | 0.0004 | - | 76.2 | No temperature increase | 59.9 |
| Experimental Example 3 | 0.0100 | 0.0060 | 0.0004 | 0.0015 | 79.9 | No temperature increase | 63.0 |
| Experimental Example 4 | 0.0120 | 0.0060 | 0.0004 | 0.0015 | 81.8 | No temperature increase | 59.9 |
| Experimental Example 5 | 0.0100 | 0.0060 | 0.0006 | 0.0015 | 80.7 | No temperature increase | 64.5 |
| Experimental Example 6 | 0.0100 | 0.0060 | 0.0004 | 0.0010 | 80.4 | No temperature increase | 60.7 |
| Experimental Example 7 | - | 0.0060 | 0.0004 | - | 65.2 | Temperature increase | 38.1 |
| Experimental Example 8 | 0.0100 | - | 0.0004 | - | 73.2 | Temperature increase | 32.3 |
| Experimental Example 9 | 0.0100 | 0.0060 | - | - | 74.6 | No temperature increase | 29.2 |
| Experimental Example 10 | 0.0100 | 0.0100 | - | - | 72.9 | No temperature increase | 35.1 |
| Experimental Example 11 | 0.0100 | 0.0100 | - | 0.0030 | 68.7 | No temperature increase | 68.9 |
| Experimental Example 12 | 0.0100 | 0.0100 | 0.0004 | - | 74.2 | No temperature increase | 34.3 |
| Experimental Example 13 | 0.0140 | 0.0060 | 0.0004 | - | 74.8 | No temperature increase | 47.4 |
| Experimental Example 14 | 0.0080 | 0.0060 | 0.0004 | 0.0015 | 77.3 | Temperature increase | 60.3 |

As shown in Table 1, all of the batteries of Experimental Examples 1 to 6 had a higher capacity retention rate in the cycle test and exhibited a better cycle characteristic compared to the batteries of Experimental Examples 7 to 13. Further, all of the batteries of Experimental Examples 1 to 6 showed only a minor temperature increase in the thermal test and exhibited excellent thermal stability. Although the battery of Experimental Example 14 had a good cycle characteristic, a temperature increase was observed in the thermal test. Furthermore, when the predetermined amount of Mn was contained in addition to the predetermined amounts of Al, Mg, and Ti (see Experimental Examples 3 to 6), improvement in the cycle characteristic became more notable, and the low-temperature discharge characteristic was also significantly improved (in particular, see Experimental Examples 1, 3, and 6).

Experimental examples 7 to 14 do not fall under the scope of the claims. By comparing Experimental Example 1 and Experimental Example 7, it can be understood that addition of the predetermined amount of Al specifically improves the cycle characteristic and thermal stability. Further, by comparing Experimental Example 1 and Experimental Example 8, it can be understood that addition of the predetermined amount of Mg specifically improves the cycle characteristic and thermal stability. It is considered that addition of the predetermined amounts of Al and Mg stabilizes the crystal structure of LCO. Furthermore, by comparing Experimental Example 1 and Experimental Example 9, it can be understood that addition of the predetermined amount of Ti specifically improves the cycle characteristic. It is considered that addition of the predetermined amount of Ti reduces material resistance of the composite oxide, which results in improving the cycle characteristic.

### REFERENCE SIGNS LIST

10 non-aqueous electrolyte secondary battery; 11 positive electrode; 12 negative electrode; 13 separator; 14 electrode assembly; 16 outer can; 17 sealing assembly; 18, 19 insulation plate; 20 positive electrode lead; 21 negative electrode lead; 22 grooved portion; 23 internal terminal plate; 24 lower vent member; 25 insulation member; 26 upper vent member; 27 cap; 28 gasket.

## Claims

1. A positive electrode active material for non-aqueous electrolyte secondary battery (10), comprising, as a main component being a component having the highest mass ratio among the materials constituting the positive electrode active material, a lithium cobalt composite oxide having a layered crystal structure, wherein
the lithium cobalt composite oxide is a composite oxide represented by general formula LiCo_{(1-w-x-y-z)}Al_{w}MgₓTi_{y}Mn_{z}O₂, where 0.010 ≤ w ≤ 0.013, 0.003 ≤ x ≤ 0.006, 0.0004 ≤ y ≤ 0.0006, and 0 ≤ z ≤ 0.0015.

2. The positive electrode active material according to claim 1, wherein
the lithium cobalt composite oxide contains Mn, and, in the general formula, Mn content (z) satisfies 0.0010 ≤ z ≤ 0.0015.

3. The positive electrode active material according to claim 1 or 2, wherein
the lithium cobalt composite oxide includes a first composite oxide represented by said general formula, and a second composite oxide represented by general formula LiCoO₂, and
a content of the first composite oxide is greater than or equal to 60 mass% based on a mass of the positive electrode active material.

4. A non-aqueous electrolyte secondary battery (10), comprising
a positive electrode (11), a negative electrode (12), and a non-aqueous electrolyte, wherein
the positive electrode (11) contains the positive electrode active material according to any one of claims 1 to 3.

## Patentansprüche

1. Positivelektroden-Aktivmaterial für eine Nichtwässrige-Elektrolyt-Sekundärbatterie (10), umfassend, als Hauptbestandteil, welcher ein Bestandteil mit dem höchsten Massenverhältnis unter den das Positivelektroden-Aktivmaterial bildenden Materialien ist, ein Lithium-Cobalt-Verbundoxid mit einer schichtförmigen Kristallstruktur, wobei
das Lithium-Cobalt-Verbundoxid ein Verbundoxid ist, dargestellt durch die allgemeine Formel LiCo_{(1-w-x-y-z)}Al_{w}MgₓTi_{y}Mn_{z}O₂, wobei 0,010 ≤ w ≤ 0,013, 0,003 ≤ x ≤ 0,006, 0,0004 ≤ y ≤ 0,0006 und 0 ≤ z ≤ 0,0015.

2. Positivelektroden-Aktivmaterial nach Anspruch 1, wobei das Lithium-Cobalt-Verbundoxid Mn enthält, und, in der allgemeinen Formel, der Mn-Gehalt (z) 0,0010 ≤ z ≤ 0,0015 erfüllt.

3. Positivelektroden-Aktivmaterial nach Anspruch 1 oder 2, wobei das Lithium-Cobalt-Verbundoxid ein erstes Verbundoxid, dargestellt durch die genannte allgemeine Formel, und ein zweites Verbundoxid, dargestellt durch die allgemeine Formel LiCoO₂, umfasst, und ein Gehalt des ersten Verbundoxids größer oder gleich 60 Gew.-% bezogen auf ein Gewicht des Positivelektroden-Aktivmaterials ist.

4. Nichtwässrige-Elektrolyt-Sekundärbatterie (10), umfassend eine Positivelektrode (11), eine Negativelektrode (12) und einen nichtwässrigen Elektrolyten, wobei die Positivelektrode (11) das Positivelektroden-Aktivmaterial nach einem der Ansprüche 1 bis 3 enthält.

## Revendications

1. Matériau actif d'électrode positive pour batterie secondaire à électrolyte non aqueux (10), comprenant, en tant que composant principal étant un composant ayant le rapport massique le plus élevé parmi les matériaux constituant le matériau actif d'électrode positive, un oxyde composite de lithium-cobalt ayant une structure cristalline en couches, dans lequel l'oxyde composite de lithium-cobalt est un oxyde composite représenté par la formule générale LiCo_{(1-w-x-y-z)}Al_{w}MgₓTi_{y}Mn_{z}O₂, où 0,010 ≤ w ≤ 0,013, 0,003 ≤ x ≤ 0,006, 0,0004 ≤ y ≤ 0,0006 et 0 ≤ z ≤ 0,0015.

2. Matériau actif d'électrode positive selon la revendication 1, dans lequel l'oxyde composite de lithium-cobalt contient du Mn, et, dans la formule générale, la teneur en Mn (z) satisfait 0,0010 ≤ z ≤ 0,0015.

3. Matériau actif d'électrode positive selon la revendication 1 ou 2, dans lequel l'oxyde composite de lithium-cobalt comprend un premier oxyde composite représenté par ladite formule générale, et un second oxyde composite représenté par la formule générale Li-CoO₂, et une teneur du premier oxyde composite est supérieure ou égale à 60 % en masse par rapport à une masse du matériau actif d'électrode positive.

4. Batterie secondaire à électrolyte non aqueux (10), comprenant une électrode positive (11), une électrode négative (12) et un électrolyte non aqueux, dans laquelle l'électrode positive (11) contient le matériau actif d'électrode positive selon l'une quelconque des revendications 1 à 3.
